# EUROPEAN PATENT APPLICATION

(11) **EP 4 835 331 A1**
(43) Date of publication of application: **04.11.2026**
(21) Application number: 24912314.2
(22) Date of filing: 09.12.2024
(51) Int. Cl.: F16H 61/664, F16H 59/14, F16H 59/40, F16H 59/42, F16H 61/02

(54) **CONTINUOUSLY VARIABLE TRANSMISSION SYSTEM, CONTINUOUSLY VARIABLE TRANSMISSION, AND METHOD FOR CONTROLLING CONTINUOUSLY VARIABLE TRANSMISSION SYSTEM**

(30) Priority: 25.12.2023 JP 2023218634
(71) Applicant: Sumitomo Heavy Industries, Ltd., Tokyo 141-6025 (JP)
(72) Inventor: NAGUMO, Toshiya, Yokosuka-shi Kanagawa 237-8555 (JP); SHINNAKA, Shinji, Kawasaki-shi Kanagawa 211-0004 (JP)
(74) Representative: Louis Pöhlau Lohrentz
(86) International application number: PCT/JP2024/043372
(87) International publication number: WO 2025/142425

(57) **Abstract**

A continuously variable transmission system 100 includes a continuously variable transmission 2 that includes a rolling element and a trajectory ring in contact with the rolling element and that changes a speed of rotation of an input shaft 22 and outputs the rotation at the changed speed to an output shaft 25, a drive source that inputs rotation to the input shaft 22, an input shaft control unit 10 that controls the rotation of the input shaft 22 via the drive source, a speed ratio changing device 31 that changes a speed ratio of the continuously variable transmission 2, a speed ratio control unit 30 that controls the speed ratio via the speed ratio changing device 31, an output shaft information detection unit 16 that detects rotation information of the output shaft 25, and a command signal supply unit 50 that supplies a speed ratio command signal P1 to the speed ratio control unit 30 and a rotation command signal S1 to the input shaft control unit 10, based on an output command signal for the output shaft 25 and a detection result F1 of the output shaft information detection unit 16.

## Description

### Technical Field

The present disclosure relates to a continuously variable transmission system, a continuously variable transmission, and a method for controlling a continuously variable transmission system.

### Background Art

Continuously variable transmissions referred to as infinitely variable transmissions (IVTs), which are capable of an infinite speed ratio, have been known. The present applicant discloses, in PTL 1, a technique of a friction transmission device including an input trajectory ring, a planetary rolling element, and an output trajectory ring. In the device, the planetary rolling element is disposed about a rotation axis of the input trajectory ring and comes into contact with the input trajectory ring, and the output trajectory ring comes into contact with the planetary rolling element and is connected to an output shaft. In addition, the device includes a plurality of support trajectory rings that come into contact with the planetary rolling element and changes the speed of a rotation input to the input trajectory ring to output the rotation at the changed speed from the output shaft.

### Citation List

### Patent Literature

[PTL 1] International Publication No. 2021/182001

### Summary of Invention

### Technical Problem

The present inventor has made the following recognition regarding the continuously variable transmission. Since a continuously variable transmission described in PTL 1 includes a traction mechanism that transmits rotation between members in contact with each other, a relative slip between angular velocities occurs in which an output shaft angular velocity is smaller than a result obtained by multiplying an input shaft angular velocity by a speed ratio. This relative slip between the angular velocities has been a bottleneck in controlling an output of the continuously variable transmission with high accuracy.

The present disclosure has been made in view of such a problem, and an object of the present disclosure is to provide a continuously variable transmission system capable of controlling an output of a continuously variable transmission with high accuracy.

### Solution to Problem

In order to solve the above-described problem, a continuously variable transmission system of an aspect of the present disclosure includes a continuously variable transmission that includes a rolling element and a trajectory ring in contact with the rolling element and that changes a speed of rotation of an input shaft and outputs the rotation at the changed speed to an output shaft, a drive source that inputs rotation to the input shaft, an input shaft control unit that controls the rotation of the input shaft via the drive source, a speed ratio changing device that changes a speed ratio of the continuously variable transmission, a speed ratio control unit that controls the speed ratio via the speed ratio changing device, an output shaft information detection unit that detects rotation information of the output shaft, and a command signal supply unit that supplies a speed ratio command signal to the speed ratio control unit and a rotation command signal to the input shaft control unit, based on an output command signal for the output shaft and a detection result of the output shaft information detection unit.

Another aspect of the present disclosure is a continuously variable transmission. This continuously variable transmission is a continuously variable transmission including: a rolling element; and a trajectory ring that is in contact with the rolling element, in which a speed of rotation of an input shaft is changed and the rotation at the changed speed is output to an output shaft, and a speed ratio of the continuously variable transmission and the rotation of the input shaft are controlled, based on an output command signal for rotation of the output shaft and rotation information of the output shaft.

Still another aspect of the present disclosure is a method for controlling a continuously variable transmission system. This method is a method for controlling a continuously variable transmission system including a continuously variable transmission that includes a rolling element and a trajectory ring in contact with the rolling element and that changes a speed of rotation of an input shaft and outputs the rotation at the changed speed to an output shaft, and a speed ratio changing device that changes a speed ratio of the continuously variable transmission, the method including: detecting rotation information of the output shaft; and controlling the speed ratio of the continuously variable transmission and the rotation of the input shaft, based on an output command signal for rotation of the output shaft and the rotation information.

Any combinations of the above components, and substitutions in which components and expressions of the present disclosure are interchangeably replaced among methods, systems, and the like, are also effective as aspects of the present disclosure.

### Advantageous Effects of Invention

According to the present disclosure, it is possible to provide the continuously variable transmission system capable of controlling the output of the continuously variable transmission with high accuracy.

### Brief Description of Drawings

FIG. 1 is a block diagram showing a continuously variable transmission system of a first embodiment.
FIG. 2 is a vertical cross-sectional view showing a configuration of a continuously variable transmission of FIG. 1.
FIG. 3 is a diagram showing an example of a relationship between a relative slip between angular velocities and an output shaft torque of the continuously variable transmission of FIG. 2.
FIG. 4 is a diagram schematically showing an example of a relationship between a speed ratio and an angular velocity of an input shaft in the continuously variable transmission of FIG. 2.
FIG. 5 is a block diagram showing a continuously variable transmission system of a second embodiment.
FIG. 6 is a block diagram showing a continuously variable transmission system of a third embodiment.

### Description of Embodiments

Hereinafter, the present disclosure will be described with reference to each drawing based on a preferred embodiment. In the embodiments and modification examples, the same or equivalent components and members will be represented by the same reference numerals and duplicate descriptions will be appropriately omitted. In addition, dimensions of the members in each drawing are shown enlarged or reduced as appropriate for easy understanding. Moreover, in each drawing, some of the members not important for the description of the embodiment are not shown.

Further, terms including ordinal numbers such as first and second are used to describe various components, but these terms are only used to distinguish one component from another component and do not limit the components defined by these terms.

### [First Embodiment]

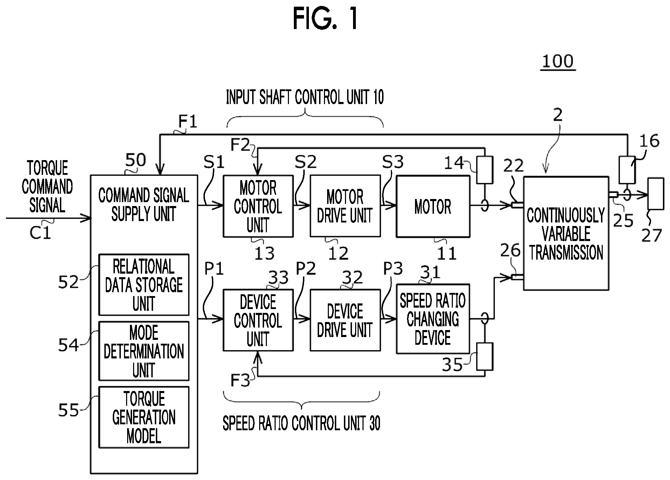

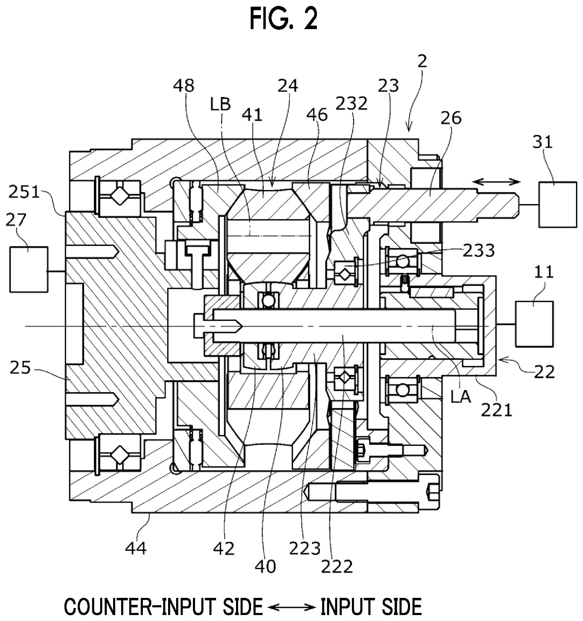

A continuously variable transmission system 100 according to a first embodiment of the present disclosure will be described with reference to FIGS. 1 to 4. FIG. 1 is a block diagram of the continuously variable transmission system 100. FIG. 2 is a vertical cross-sectional view showing a configuration of a continuously variable transmission 2.

The continuously variable transmission system 100 controls output rotation of the continuously variable transmission 2 that drives a driven device 27 based on a torque command signal C1 provided from the outside of the system. The torque command signal C1, and an angular velocity command signal J1 and an angular position command signal K1, which will be described later, may be collectively referred to as an output command signal. For convenience of description, in FIG. 2, an axial direction of the continuously variable transmission 2 is simply referred to as an "axial direction", a right side in the axial direction is referred to as an input side, and an opposite side is referred to as a counter-input side.

As shown in FIG. 1, the continuously variable transmission system 100 mainly includes the continuously variable transmission 2, a motor 11, an input shaft control unit 10, a speed ratio changing device 31, a speed ratio control unit 30, a command signal supply unit 50, an input shaft information detection unit 14, an output shaft information detection unit 16, and a speed ratio input detection unit 35. The continuously variable transmission system 100 of the present embodiment controls an output torque of the continuously variable transmission 2 to approach a given target value.

Although each functional block shown in FIGS. 1, 5, and 6 can be implemented in hardware by elements and electronic circuits such as a processor, a CPU, and a memory of a computer, as well as mechanical devices, and can be implemented in software by computer programs or the like, here, functional blocks implemented through their collaboration are shown. Accordingly, it is understood by those skilled in the art that these functional blocks can be implemented in various forms by a combination of hardware and software. The input shaft control unit 10, the speed ratio control unit 30, and the command signal supply unit 50, and an angular velocity control unit 60 and an angular position control unit 62, which will be described later, of the present embodiment are mainly implemented by a CPU and a program thereof.

The drive source is not limited as long as it can input rotation to an input shaft 22, and in this example, the motor 11 is exemplified. The motor 11 inputs rotation to the input shaft 22 of the continuously variable transmission 2. The continuously variable transmission 2 changes the speed of rotation input to the input shaft 22 and outputs the rotation at the changed speed to an output shaft 25. The continuously variable transmission 2 includes a speed change mechanism 24 including a traction mechanism that includes a rolling element 41 and a trajectory ring in contact with the rolling element 41. The rolling element 41 of the present embodiment is a planetary rolling element that revolves while rotating. For example, the continuously variable transmission 2 drives the driven device 27 by the rotation of the output shaft 25.

The continuously variable transmission 2 includes a speed ratio input unit 26 that receives power for changing a speed ratio of the speed change mechanism 24. The axial position of the speed ratio input unit 26 is changed by this power, and thus the speed ratio is changed. The speed ratio changing device 31 outputs power to the speed ratio input unit 26 to change the speed ratio of the continuously variable transmission 2. The speed ratio control unit 30 controls the speed ratio via the speed ratio changing device 31. The speed ratio of the speed change mechanism 24 referred to in the present specification refers to an ideal speed ratio defined from mechanical dimensions of constituent members of the speed change mechanism 24. Since the actual speed ratio is affected by a relative slip between angular velocities described later, the actual speed ratio deviates slightly from the ideal speed ratio.

The input shaft information detection unit 14 detects rotation information for the rotation of the input shaft 22 and outputs the detection result as input-side information F2. The rotation of the input shaft 22 is also output rotation of the motor 11. The output shaft information detection unit 16 detects rotation information for the rotation of the output shaft 25 and outputs the detection result as a detection result F1. The rotation of the output shaft 25 is also input rotation of the driven device 27. Examples of the rotation information include angular velocities and angular positions of the input shaft 22 and the output shaft 25. The detection result F1 of this example is an angular velocity of the output shaft 25. The speed ratio input detection unit 35 measures a physical quantity output by the speed ratio changing device 31 to the speed ratio input unit 26 and outputs the measurement result as speed ratio information F3.

The input shaft information detection unit 14, the output shaft information detection unit 16, and the speed ratio input detection unit 35 of the present embodiment are rotary encoders capable of measuring an angular position and an angular velocity of a rotary shaft. These detection units may be configured of different types of sensors or the same type of sensors.

The command signal supply unit 50 generates a rotation command signal S1 and a speed ratio command signal P1 based on a torque command signal C1 for the torque of the output shaft 25 provided from higher-level means and the detection result F1 of the output shaft information detection unit 16. The command signal supply unit 50 supplies the generated rotation command signal S1 to the input shaft control unit 10 and supplies the generated speed ratio command signal P1 to the speed ratio control unit 30. The higher-level means is not limited as long as the higher-level means is an element capable of generating the torque command signal C1, and may be, for example, a higher-level control element. The higher-level means may be provided in the continuously variable transmission system 100. The torque command signal C1 for the torque of the output shaft 25 is a target value of the torque of the output shaft 25, and the detection result F1 may be a feedback value.

The input shaft control unit 10 is an angular velocity control unit that controls the angular velocity of the input shaft 22, and provides motor drive power S3 to the motor 11 based on the rotation command signal S1. The motor 11 rotates based on the motor drive power S3 and inputs the rotation to the input shaft 22. That is, the input shaft control unit 10 controls the angular velocity of the input shaft 22 via the motor 11.

The input shaft control unit 10 of the embodiment includes a motor control unit 13 and a motor drive unit 12. The motor control unit 13 compares the angular velocity of the input shaft 22 calculated from the input-side information F2 with the rotation command signal S1 and provides a motor control signal S2 generated based on the result to the motor drive unit 12. As an example, the motor control unit 13 may be a PI controller. The motor drive unit 12 supplies the motor drive power S3 to the motor 11 based on the motor control signal S2. As an example, the motor drive unit 12 may be a three-phase inverter.

The speed ratio control unit 30 provides device drive power P3 to the speed ratio changing device 31 based on the speed ratio command signal P1. The speed ratio changing device 31 changes the axial position of the speed ratio input unit 26 based on the device drive power P3, thereby changing the speed ratio of the continuously variable transmission 2. That is, the speed ratio control unit 30 controls the speed ratio of the continuously variable transmission 2 via the speed ratio changing device 31.

The speed ratio control unit 30 of the embodiment includes a device control unit 33 and a device drive unit 32. The device control unit 33 compares the axial position of the speed ratio input unit 26 calculated from the speed ratio information F3 with the speed ratio command signal P1 and provides a device control signal P2 generated based on the result to the device drive unit 32. The device drive unit 32 supplies the device drive power P3 to the speed ratio changing device 31 based on the device control signal P2. As an example, the device drive unit 32 may be a three-phase inverter.

The specific type of the speed ratio changing device 31 is not particularly limited as long as the speed ratio of the continuously variable transmission 2 can be changed. As the speed ratio changing device 31, for example, a linear actuator or a rotary actuator can be adopted. The speed ratio changing device 31 of the embodiment is a device in which a motion conversion mechanism that converts rotational motion into linear motion is combined with a rotary actuator, and inputs power along the axial direction of the continuously variable transmission 2 to the speed ratio input unit 26 of the continuously variable transmission 2. As the rotary actuator of the speed ratio changing device 31, a device based on a known principle, such as a servo motor, a stepping motor, or an ultrasonic motor, can be used. As the motion conversion mechanism of the speed ratio changing device 31, a mechanism based on a known principle, such as a ball screw, a rack and pinion, or a cam, can be used. The rotary actuator and the motion conversion mechanism may be connected to each other via a known transmission mechanism such as a gear, a chain, or a belt.

The motor 11 of the present embodiment is an electric motor that rotates a motor shaft (not shown) by using electric energy. The motor 11 rotates the motor shaft by using a torque generated by the cooperation of a stator (not shown) and a rotor (not shown), and then outputs the rotation from the motor shaft to the continuously variable transmission 2. The type of the motor 11 is not limited, and the motor 11 is a servo motor in this example. The motor 11 may be, for example, a DC motor or an AC motor other than the servo motor.

The schematic operation of the continuously variable transmission 2 will be described. The continuously variable transmission 2 includes the input shaft 22, the speed change mechanism 24, and a speed ratio changing mechanism 23. The rotation to be subjected to speed change is input to the input shaft 22 from the motor 11. The speed change mechanism 24 changes the speed of rotation input to the input shaft 22 and then transmits the rotation at the changed speed to the output shaft 25. The continuously variable transmission 2 outputs the rotation at the changed speed by the speed change mechanism 24 from the output shaft 25 to the driven device 27. The speed ratio changing mechanism 23 changes the speed ratio of the speed change mechanism 24.

Hereinafter, the rotation of the motor 11 refers to the rotation of an object rotating in the motor 11, and, in this example, refers to the rotation of the output shaft of the motor 11. In addition, the rotation of the driven device 27 refers to the rotation of an object rotating in the driven device 27.

A specific configuration of the continuously variable transmission 2 of the present embodiment will be described. The continuously variable transmission 2 can change the actual speed ratio, which is the actual speed ratio, in a stepless or continuous manner by the speed ratio changing device 31 using the speed ratio changing mechanism 23. Here, the speed ratio means a ratio of an output angular velocity, which is an angular velocity of the output shaft 25, to an input angular velocity, which is an angular velocity of the input shaft 22. This ratio is obtained by dividing the output angular velocity by the input angular velocity. The continuously variable transmission 2 of the embodiment is an infinitely variable transmission, and is configured such that the variable range of the actual speed ratio includes zero. The infinitely variable transmission may be referred to as an "infinitely variable transmission", and the abbreviation "IVT" may be used. The actual speed ratio being zero is a case where the actual speed ratio is 1/∞. Here, an example of such a continuously variable transmission 2 will be described, but the specific example is not particularly limited.

The input shaft 22 includes an input member 221 to which rotation is input from the motor 11, a shaft 222 connected to the input member 221, and a sleeve 223 fixed to the shaft 222. The specific structure of the input shaft 22 is not particularly limited as long as the rotation can be transmitted from the motor 11 to the speed change mechanism 24. The input shaft 22 here is an example in which the input shaft 22 is configured by a plurality of members, but may be configured by a single member, and the number of members is not particularly limited.

The speed change mechanism 24 includes an input trajectory ring 40 provided to be integrally rotatable with the input shaft 22, a first support trajectory ring 42 rotatably supported by the input shaft 22, a second support trajectory ring 46 provided to be movable in the axial direction in a casing 44 of the continuously variable transmission 2, an output trajectory ring 48 provided to be integrally rotatable with the output shaft 25, and a plurality of the rolling elements 41. The trajectory rings 40, 42, 46, and 48 are simply collectively referred to as trajectory rings. The plurality of rolling elements 41 roll on the respective trajectory rings 40, 42, 46, and 48. The plurality of rolling elements 41 are pressed against the output trajectory ring 48 by a pressing force applied from the second support trajectory ring 46 by a pressing force applying mechanism (not shown).

When the input trajectory ring 40 rotates, the rolling element 41 revolves around a rotation axis line LA, which is a revolution axis of the input shaft 22, while rotating about a rotation axis LB. When the rolling element 41 revolves, the output trajectory ring 48 rotates around the rotation axis line LA following the rolling element 41. In this case, ideally, the output trajectory ring 48 rotates at an output angular velocity obtained by multiplying an input angular velocity of the input shaft 22 by a speed ratio. The speed ratio is determined according to a tilt angle of the rotation axis LB with respect to the rotation axis line LA, and is changed by the speed ratio changing mechanism 23.

The output shaft 25 includes the output trajectory ring 48 and an output member 251 connected to the output trajectory ring 48 to be integrally rotated and outputting the rotation to the driven device 27. The specific structure of the output shaft 25 is not particularly limited as long as the rotation can be transmitted from the speed change mechanism 24 to the driven device 27. The output shaft 25 here is an example in which the output shaft 25 is configured by a plurality of members, but may be configured by a single member, and the number of members is not particularly limited.

The speed ratio changing mechanism 23 of the present embodiment can change the speed ratio by changing the posture of the input trajectory ring 40. The speed ratio changing mechanism 23 includes the shaft-shaped speed ratio input unit 26 that is axially movable by power output from a speed ratio changing device 31, and a ring member 232 that is integrally axially movable with the speed ratio input unit 26. The ring member 232 rotatably supports the input shaft 22 via a bearing 233, and is integrally axially movable with the input shaft 22 by a retaining ring or the like. The specific example of the speed ratio changing mechanism 23 is not particularly limited, and various similar mechanisms adopted in the continuously variable transmission 2 may be adopted.

When power in the axial direction is input to the speed ratio input unit 26 from the speed ratio changing device 31, the input shaft 22 including the input trajectory ring 40 and the first support trajectory ring 42 integrally moves in the axial direction together with the ring member 232. The input trajectory ring 40 and the first support trajectory ring 42 move in the axial direction with respect to the second support trajectory ring 46 and the output trajectory ring 48, so that the tilt angle of the rotation axis LB of the rolling element 41 with respect to the rotation axis line LA is changed, and the speed ratio is changed according to the tilt angle. The speed ratio is zero when the rotation axis LB is parallel to the rotation axis line LA, and continuously increases as the tilt angle of the rotation axis LB with respect to the rotation axis line LA increases. That is, the actual speed ratio can be changed in a stepless or continuous manner, and is configured such that the variable range includes zero.

The present applicant has disclosed an example of an infinitely variable transmission in Japanese Unexamined Patent Publication No. 2021-181812, Japanese Unexamined Patent Publication No. 2022-135086, and the like, and the technique of the continuously variable transmission is understood by those skilled in the art.

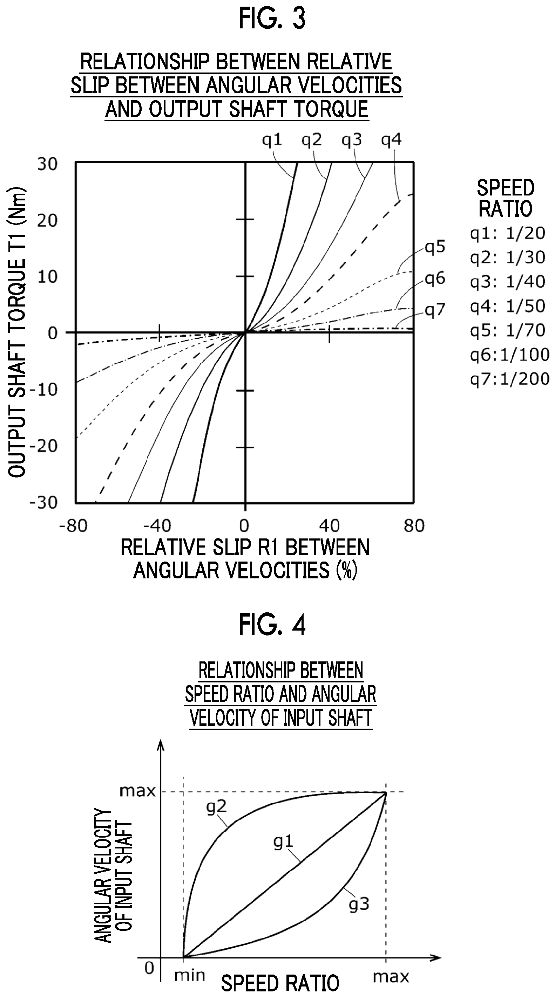

Next, a relationship between an output shaft torque T1 of the continuously variable transmission 2 and a relative slip R1 between angular velocities of the input shaft 22 and the output shaft 25 will be described with reference to FIG. 3. Hereinafter, the output shaft torque T1 may be referred to as a "torque T1", and the relative slip R1 between the angular velocities may be referred to as a "slip R1". FIG. 3 is a diagram showing an example of a relationship between the slip R1 and the torque T1 of the continuously variable transmission 2. In this diagram, the horizontal axis represents the slip R1, and the vertical axis represents the torque T1. A case where the angular velocity of the output shaft 25 is 2 (rad/s) is shown. In this diagram, regions where the torque T1 is zero and positive indicate a power running state, and a region where the torque T1 is negative indicates a regenerative state. q1, q2, q3, q4, q5, q6, and q7 indicate relationships between the slip R1 and the torque T1 corresponding to respective speed ratios.

Since the continuously variable transmission 2 is a traction mechanism including the rolling element 41 and the trajectory ring that are in contact with each other, the slip R1 corresponding to the torque T1 occurs between the input shaft 22 and the output shaft 25. The slip R1 can be defined by Equation 1. 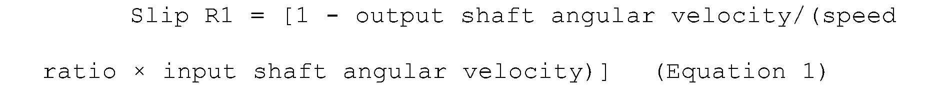 Slip R1 = [1 - output shaft angular velocity/(speed ratio × input shaft angular velocity)] (Equation 1)

In FIG. 3, the slip R1 is indicated in percentage. As shown in FIG. 3, in a case where the slip R1 is zero, the torque T1 is substantially zero, and the torque T1 increases substantially non-linearly as the slip R1 increases. This relationship can be regarded as a relationship in which the slip R1 increases as the torque T1 increases, or can be regarded as a relationship in which the torque T1 increases as the slip R1 increases.

In addition, as shown in FIG. 3, the relationship between the slip R1 and the torque T1 is significantly changed depending on the speed ratio. As described above, since the relationship between the slip R1 and the torque T1 is non-linear and is changed depending on the speed ratio, it is difficult to improve the control accuracy in a case where the output of the continuously variable transmission 2 is controlled based on the target without considering the relationship between the slip R1 and the torque T1. The output of the continuously variable transmission 2 is the torque of the output shaft 25, the angular velocity of the output shaft 25, and the angular position of the output shaft 25.

In view of the above, in the present embodiment, as an example, the command signal supply unit 50 generates a rotation command signal S1 and a speed ratio command signal P1 by using relational data D1 between the torque T1 and the slip R1 of the continuously variable transmission 2. For this reason, the continuously variable transmission system 100 includes a relational data storage unit 52 that stores the relational data D1. In the present embodiment, the relational data storage unit 52 is provided in the command signal supply unit 50, but may be provided outside the command signal supply unit 50. The relational data D1 can be acquired in advance by actually measuring or simulating the relationship between the torque T1 and the slip R1 for the continuously variable transmission 2.

The speed ratio command signal P1 and the rotation command signal S1 can also be generated at the same time. As an example, the command signal supply unit 50 of the present embodiment generates one command signal of the speed ratio command signal P1 and the rotation command signal S1 by using the relational data D1, and generates the other command signal from the generated one command signal. In this case, the generation algorithm is simplified, and the device can be configured with a small-scale device. In the present embodiment, the speed ratio command signal P1 is generated by using the relational data D1, and the rotation command signal S1 is generated from the generated speed ratio command signal P1.

The continuously variable transmission system 100 has a power running state in which the continuously variable transmission 2 gives positive kinetic energy to the driven device 27, and a regenerative state in which the continuously variable transmission 2 gives negative kinetic energy to the driven device 27. A state in which neither positive nor negative kinetic energy is given is included in the power running state. In the present embodiment, the command signal supply unit 50 switches the generation algorithm between a power running mode corresponding to the power running state and a regenerative mode corresponding to the regenerative state.

Specifically, the command signal supply unit 50 has the power running mode and the regenerative mode as generation modes that generate the speed ratio command signal P1 and the rotation command signal S1, and generates the speed ratio command signal P1 and the rotation command signal S1 in either the power running mode or the regenerative mode based on the mode determination result of a mode determination unit 54. In this case, the control accuracy can be improved by using the generation algorithm suitable for each mode. The generation algorithm may be, for example, a transfer function.

The polarity of the value of the slip R1 changes between the power running state and the regenerative state. For example, since the value of the slip R1 has a positive polarity in the power running state and has a negative polarity in the regenerative state, the mode can be determined according to the polarity of the value of the slip R1 calculated from the angular velocity of the input shaft 22, the angular velocity of the output shaft 25, and the speed ratio by the speed ratio input unit 26.

In the embodiment, the mode determination unit 54 performs determination between the power running mode and the regenerative mode based on the detection result F1, which is a detection result of the output shaft information detection unit 16, and the input-side information F2, which is a detection result of the input shaft information detection unit 14. In particular, the mode determination unit 54 determines whether or not the continuously variable transmission system 100 is in the regenerative state from the relationship between the angular velocity of the input shaft 22 and the angular velocity of the output shaft 25, determines that the mode is the regenerative mode in a case where the continuously variable transmission system 100 is in the regenerative state, and determines that the mode is the power running mode in a case where the continuously variable transmission system 100 is not in the regenerative state.

A method of generating the speed ratio command signal P1 in the command signal supply unit 50 will be described. In the command signal supply unit 50, the speed ratio command signal P1 is generated by calculation using the motor 11 and a torque generation model 55 of the continuously variable transmission 2. The torque generation model 55 is a model that receives three parameters of the speed ratio, the angular velocity of the input shaft 22, and the angular velocity of the output shaft 25 as inputs and outputs the torque of the output shaft 25, and incorporates the relational data D1. The torque generation model 55 can be acquired in advance by actually measuring or simulating the relationship between the torque T1, the speed ratio, the angular velocity of the input shaft 22, and the angular velocity of the output shaft 25 for the motor 11 and the continuously variable transmission 2. The command signal supply unit 50 includes two torque generation models 55 for the power running mode and the regenerative mode, and switches and uses the torque generation models 55 based on the mode determination result.

The angular velocity of the input shaft 22 can be calculated from the input-side information F2, and the angular velocity of the output shaft 25 can be calculated from the detection result F1.

A method of generating the rotation command signal S1 in the command signal supply unit 50 will be described. The rotation command signal S1 can be generated by substituting the generated speed ratio command signal P1 and the angular velocity of the input shaft 22 into the calculation model. The calculation model can be acquired in advance by actually measuring or simulating the relationship between the speed ratio command signal P1 and the angular velocity of the input shaft 22.

According to the study, the relationship between the speed ratio and the angular velocity of the input shaft 22 has a plurality of different characteristics. FIG. 4 is a diagram schematically showing an example of a relationship between the speed ratio and the angular velocity of the input shaft 22. In this figure, the horizontal axis represents the speed ratio, and the vertical axis represents the angular velocity. As shown in FIG. 4, the relationship between the speed ratio and the angular velocity of the input shaft 22 is considered to have various characteristics such as a linear characteristic represented by g1, a convex curved characteristic represented by g2, and a concave curved characteristic represented by g3. Therefore, the relationship between the speed ratio and the angular velocity of the input shaft 22 can be specified in advance and incorporated into the calculation model for generating the rotation command signal S1. The relationship between the speed ratio and the angular velocity of the input shaft 22 can be regarded as correction information for correcting the transfer function of the command signal supply unit 50.

As another method of generating the speed ratio command signal P1 and the rotation command signal S1, a method using a learning model can be adopted. The learning model can be generated in advance by machine learning based on a data set of the actually measured values of the torque of the output shaft 25, the speed ratio, the angular velocity of the input shaft 22, and the angular velocity of the output shaft 25 which are collected for the motor 11 and the continuously variable transmission 2. The learning model can be generated using a known machine learning method such as a support vector machine, a neural network including deep learning, or a random forest, and is stored in a storage unit (not shown) in the command signal supply unit 50. By using the learning model, a control system capable of realizing high-precision control can be flexibly configured.

The continuously variable transmission system 100 of the present embodiment configured as described above controls the motor 11 and the speed ratio changing device 31 such that the torque of the output shaft 25 of the continuously variable transmission 2 approaches the target value with the torque command signal C1 as the target value, and drives the driven device 27 by the rotation of the output shaft 25.

The features of the continuously variable transmission system 100 configured as above will be described. The continuously variable transmission system 100 includes the continuously variable transmission 2 that includes the rolling element 41 and the trajectory ring in contact with the rolling element 41 and that changes the speed of rotation of the input shaft 22 and outputs the rotation at the changed speed to the output shaft 25, the motor 11 that inputs rotation to the input shaft 22, the input shaft control unit 10 that controls the angular velocity of the input shaft 22 via the motor 11, the speed ratio changing device 31 that changes the speed ratio of the continuously variable transmission 2, the speed ratio control unit 30 that controls the speed ratio via the speed ratio changing device 31, the output shaft information detection unit 16 that detects rotation information of the output shaft 25, and the command signal supply unit 50 that supplies the speed ratio command signal P1 to the speed ratio control unit 30 and the rotation command signal S1 to the input shaft control unit 10, based on the torque command signal C1 for the torque of the output shaft 25 and the detection result F1, which is a detection result of the output shaft information detection unit 16.

According to this configuration, since the torque of the output shaft 25 of the continuously variable transmission 2 can be controlled based on the torque command signal C1 for the torque of the output shaft 25, the torque of the output shaft 25 of the continuously variable transmission 2 can be controlled with high accuracy.

Hitherto, the first embodiment has been described.

### [Second Embodiment]

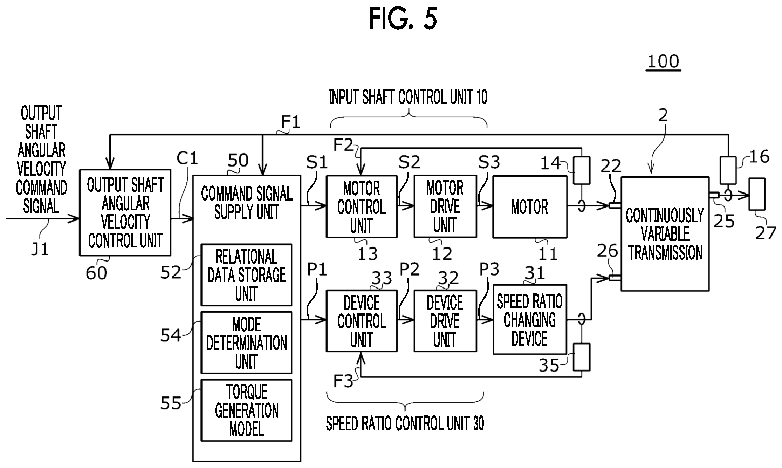

The continuously variable transmission system 100 according to a second embodiment of the present disclosure will be described with reference to FIG. 5. FIG. 5 is a block diagram of the continuously variable transmission system 100 of the present embodiment. The continuously variable transmission system 100 of the present embodiment is different from the first embodiment in that the angular velocity control unit 60 that provides the torque command signal C1 to the command signal supply unit 50 based on the angular velocity of the output shaft 25 measured by the output shaft information detection unit 16 and the angular velocity command signal J1 for the angular velocity of the output shaft 25 is provided, and other configurations are the same. Therefore, the differences will be described in detail.

The continuously variable transmission system 100 of the present embodiment controls output rotation of the continuously variable transmission 2 that drives a driven device 27 based on the angular velocity command signal J1 provided from the outside of the system. The angular velocity control unit 60 calculates the angular velocity of the output shaft 25 from the detection result F1 of the output shaft 25 detected by the output shaft information detection unit 16, compares the calculation result with the angular velocity command signal J1, and generates and outputs the torque command signal C1 of the output shaft 25 based on the comparison result.

For example, the angular velocity command signal J1 is provided from higher-level means. The higher-level means is not limited as long as the higher-level means is an element capable of generating the angular velocity command signal J1, and may be, for example, a higher-level control element. The higher-level means may be provided in the continuously variable transmission system 100. The angular velocity command signal J1 is a target value of the angular velocity of the output shaft 25, and the detection result F1 may be a feedback value.

The continuously variable transmission system 100 of the present embodiment configured as described above controls the motor 11 and the speed ratio changing device 31 such that the angular velocity of the output shaft 25 of the continuously variable transmission 2 approaches the target value with the angular velocity command signal J1 as the target value, and drives the driven device 27 by the rotation of the output shaft 25. Therefore, it is possible to control the angular velocity of the output shaft 25 of the continuously variable transmission 2 with high accuracy.

The continuously variable transmission system 100 of the present embodiment has the same operations and effects as those of the first embodiment within a range that does not cause any contradiction.

The second embodiment has been described hereinbefore.

### [Third Embodiment]

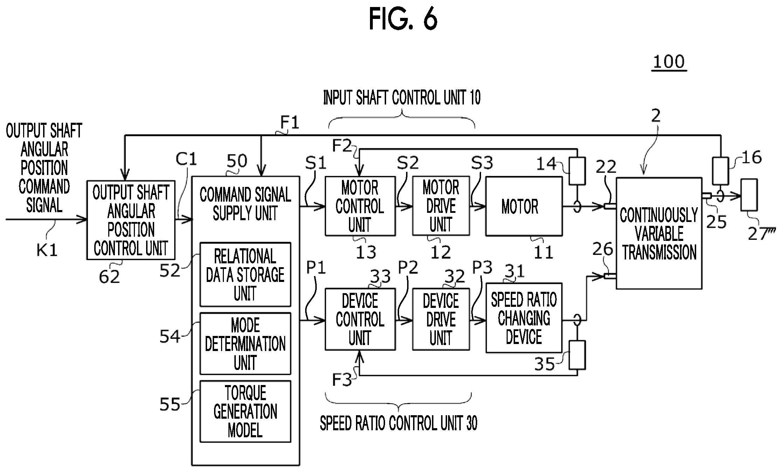

The continuously variable transmission system 100 according to a third embodiment of the present disclosure will be described with reference to FIG. 6. FIG. 6 is a block diagram of the continuously variable transmission system 100 of the present embodiment. The continuously variable transmission system 100 of the present embodiment is different from the first embodiment in that the angular position control unit 62 that provides the torque command signal C1 to the command signal supply unit 50 based on the angle of the output shaft 25 measured by the output shaft information detection unit 16 and the angular position command signal K1 for the angular position of the output shaft 25 is provided, and other configurations are the same. Therefore, the differences will be described in detail.

The continuously variable transmission system 100 of the present embodiment controls output rotation of the continuously variable transmission 2 that drives a driven device 27 based on the angular position command signal K1 provided from the outside of the system.

The continuously variable transmission system 100 of the present embodiment controls output rotation of the continuously variable transmission 2 that drives a driven device 27 based on the angular position command signal K1 provided from the outside of the system. The angular position control unit 62 calculates the output shaft 25 from the detection result F1 of the output shaft 25 detected by the output shaft information detection unit 16, compares the calculation result with the angular position command signal K1, and generates and outputs the torque command signal C1 of the output shaft 25 based on the comparison result.

For example, the angular position command signal K1 is provided from higher-level means. The higher-level means is not limited as long as the higher-level means is an element capable of generating the angular position command signal K1, and may be, for example, a higher-level control element. The higher-level means may be provided in the continuously variable transmission system 100 or may be provided outside the system. The angular position command signal K1 is a target value of the angular position of the output shaft 25, and the detection result F1 may be a feedback value.

The continuously variable transmission system 100 of the present embodiment configured as described above controls the motor 11 and the speed ratio changing device 31 such that the angular position of the output shaft 25 of the continuously variable transmission 2 approaches the target value with the angular position command signal K1 as the target value, and drives the driven device 27 by the rotation of the output shaft 25. Therefore, it is possible to control the angular position of the output shaft 25 of the continuously variable transmission 2 with high accuracy.

The continuously variable transmission system 100 of the present embodiment has the same operations and effects as those of the first embodiment within a range that does not cause any contradiction.

The third embodiment has been described hereinbefore.

The present disclosure has been described above based on the embodiments. These embodiments are merely examples, and it is understood by those skilled in the art that various modification examples and changes can be made, and such modification examples and changes are also included in the scope of claims of the present disclosure. Therefore, the descriptions and the drawings in the present specification should be treated as illustrative, rather than limiting.

### (Modification Example)

Hereinafter, modification examples will be described. In the drawings and description of the modification examples, the same or equivalent components and members as the embodiment will be represented by the same reference numerals. Description redundant with that in the embodiment will be omitted as appropriate, and description will be made focusing on configurations different from those in the embodiment.

In the above description, an example in which the angular velocity of the input shaft 22 is directly controlled has been described. However, the angular velocity of the input shaft 22 may be indirectly controlled by controlling the input shaft torque or the input shaft angle.

In the above description, an example in which the mode is determined according to the value of the slip R1 calculated from the angular velocity of the input shaft 22, the angular velocity of the output shaft 25, and the speed ratio by the speed ratio input unit 26 has been described. However, the present disclosure is not limited thereto. For example, the determination between the power running mode and the regenerative mode may be performed based on the value of the product of the angular velocity of the output shaft and the torque command signal C1. The power running mode may be set when the value of the product of the angular velocity of the output shaft and the torque command signal C1 is zero or has a positive polarity, and the regenerative mode may be set when the value has a negative polarity.

In addition, the determination between the power running mode and the regenerative mode may be performed by a calculation model including the angular velocity of the input shaft, the angular velocity of the output shaft, and the torque command signal C1 as parameters. This calculation model can be acquired in advance by actually measuring or simulating the characteristics of the continuously variable transmission.

In the above description, an example in which the motor shaft and the input shaft of the continuously variable transmission are directly connected has been described. However, the present disclosure is not limited thereto. For example, the motor shaft and the input shaft of the continuously variable transmission may be connected via various known transmission mechanisms such as a gear, a chain, and a belt.

In the above description, an example in which the speed ratio input detection unit 35 is a rotary encoder has been described. However, the present disclosure is not limited thereto. For example, the speed ratio input detection unit 35 may be a linear encoder.

In the above description, an example in which each control unit of the continuously variable transmission system 100 performs feedback control has been described. However, the present disclosure is not limited thereto. For example, one of the control units of the continuously variable transmission system 100 may perform feedforward control. In addition, the continuously variable transmission system 100 may include a state estimation unit by an observer.

In the above description, an example in which the mode determination unit 54 is provided in the command signal supply unit 50 has been described. However, the mode determination unit may be provided outside the command signal supply unit.

Each of these modification examples exhibits the same operation and effect as those of the embodiment.

Any combination of the above embodiments and modification examples is also useful as an embodiment of the present disclosure. The new embodiment resulting from the combination has the effects of both the combined embodiment and modification examples.

### Industrial Applicability

The present disclosure relates to a continuously variable transmission system, a continuously variable transmission, and a method for controlling a continuously variable transmission system.

### Reference Signs List

- 2: continuously variable transmission
- 10: input shaft control unit
- 11: motor
- 12: motor drive unit
- 13: motor control unit
- 14: input shaft information detection unit
- 16: output shaft information detection unit
- 22: input shaft
- 23: speed ratio changing mechanism
- 25: output shaft
- 26: speed ratio input unit
- 30: speed ratio control unit
- 31: speed ratio changing device
- 40: input trajectory ring
- 41: rolling element
- 42: first support trajectory ring
- 46: second support trajectory ring
- 48: output trajectory ring
- 50: command signal supply unit
- 52: relational data storage unit
- 54: mode determination unit
- 55: torque generation model
- 60: angular velocity control unit
- 62: angular position control unit
- 100: continuously variable transmission system

## Claims

1. A continuously variable transmission system comprising:
a continuously variable transmission that includes a rolling element and a trajectory ring in contact with the rolling element and that changes a speed of rotation of an input shaft and outputs the rotation at the changed speed to an output shaft;
a drive source that inputs rotation to the input shaft;
an input shaft control unit that controls the rotation of the input shaft via the drive source;
a speed ratio changing device that changes a speed ratio of the continuously variable transmission;
a speed ratio control unit that controls the speed ratio via the speed ratio changing device;
an output shaft information detection unit that detects rotation information of the output shaft; and
a command signal supply unit that supplies a speed ratio command signal to the speed ratio control unit and a rotation command signal to the input shaft control unit, based on an output command signal for the output shaft and a detection result of the output shaft information detection unit.

2. The continuously variable transmission system according to claim 1,
wherein the input shaft control unit is an angular velocity control unit that controls an angular velocity of the input shaft.

3. The continuously variable transmission system according to claim 1 or 2,
wherein the command signal supply unit generates the rotation command signal to the input shaft control unit and the speed ratio command signal by using relational data between an output shaft torque of the continuously variable transmission and a relative slip between angular velocities of the input shaft and the output shaft.

4. The continuously variable transmission system according to claim 3,
wherein the command signal supply unit generates one command signal of the speed ratio command signal and the rotation command signal by using the relational data, and generates the other command signal from the generated one command signal.

5. The continuously variable transmission system according to any one of claims 1 to 4,
wherein the command signal supply unit has a power running mode and a regenerative mode as generation modes that generate the speed ratio command signal and the rotation command signal, and generates the speed ratio command signal and the rotation command signal in either the power running mode or the regenerative mode based on a mode determination result.

6. The continuously variable transmission system according to claim 5, further comprising:
an input shaft information detection unit that detects the rotation of the input shaft,
wherein the command signal supply unit includes a mode determination unit that performs determination between the power running mode and the regenerative mode based on the detection result of the output shaft information detection unit and a detection result of the input shaft information detection unit.

7. The continuously variable transmission system according to any one of claims 1 to 6, further comprising:
an angular velocity control unit that provides the output command signal to the command signal supply unit based on an angular velocity command signal for an angular velocity of the output shaft and the angular velocity of the output shaft measured by the output shaft information detection unit.

8. The continuously variable transmission system according to any one of claims 1 to 6, further comprising:
an angular position control unit that provides the output command signal to the command signal supply unit based on an angular position command signal for an angular position of the output shaft and the angular position of the output shaft measured by the output shaft information detection unit.

9. The continuously variable transmission system according to any one of claims 1 to 8,
wherein the output command signal for the output shaft is a torque command signal for a torque of the output shaft.

10. A continuously variable transmission comprising:
a rolling element; and a trajectory ring that is in contact with the rolling element,
wherein a speed of rotation of an input shaft is changed and the rotation at the changed speed is output to an output shaft, and a speed ratio of the continuously variable transmission and the rotation of the input shaft are controlled, based on an output command signal for rotation of the output shaft and rotation information of the output shaft.

11. A method for controlling a continuously variable transmission system including a continuously variable transmission that includes a rolling element and a trajectory ring in contact with the rolling element and that changes a speed of rotation of an input shaft and outputs the rotation at the changed speed to an output shaft, and a speed ratio changing device that changes a speed ratio of the continuously variable transmission, the method comprising:
detecting rotation information of the output shaft; and
controlling the speed ratio of the continuously variable transmission and the rotation of the input shaft, based on an output command signal for rotation of the output shaft and the rotation information.
